# EUROPEAN PATENT APPLICATION

(11) **EP 4 772 764 A1**
(43) Date of publication of application: **08.07.2026**
(21) Application number: 25202634.9
(22) Date of filing: 17.09.2025
(51) Int. Cl.: F16D 3/68, B62D 7/14, F16D 43/21

(54) **REVERSE INPUT PREVENTION APPARATUS AND REAR WHEEL STEERING APPARATUS INCLUDING SAME**

(30) Priority: 06.01.2025 KR 20250001602; 06.01.2025 KR 20250035953
(71) Applicant: Hyundai Mobis Co., Ltd., Gangnam-gu Seoul 06141 (KR)
(72) Inventor: KIM, Bong Soo, 16891 Yongin-si (KR)
(74) Representative: Vossius & Partner Patentanwälte Rechtsanwälte mbB

(57) **Abstract**

A reverse input prevention apparatus (50) and a rear wheel steering apparatus (1) are disclosed. The reverse input prevention apparatus includes: a clutch housing (51); an input shaft (52) disposed inside the clutch housing to rotate about a rotation axis; an output shaft (53) disposed inside the clutch housing to rotate about the rotation axis; and a clutch device (54) disposed inside the clutch housing, to contact the input shaft and the output shaft, transmit power from the input shaft to the output shaft, and frictionally contact the clutch housing to block power transmitted from the output shaft to the input shaft. The clutch device includes a first clutch (54-1) and a second clutch (54-2) that are rotated by rotation of the input shaft and moved outward from the rotation axis by rotation of the output shaft. The input shaft limits outward movement of the first clutch and the second clutch from the rotation axis.

## Description

### CROSS-REFERENCE TO RELATED APPLICATION

The present application claims priority and the benefit under 35 USC § 119(a) of Korean Patent Application Nos. 10-2025-0001602 and 10-2025-0035953, filed on January 6, 2025 and March 20, 2025, respectively, in the Korean Intellectual Property Office, the entire disclosures of which are incorporated herein by reference for all purposes.

### BACKGROUND

### 1. Field

Exemplary embodiments of the present disclosure relate to a reverse input prevention apparatus and a rear wheel steering apparatus including the same, and more particularly, to a reverse input prevention apparatus that prevents reverse input from rear wheels and a rear wheel steering apparatus including the same.

### 2. Description of the Related Art

A steering apparatus has evolved into a steer-by-wire type, which is not mechanically connected directly to a steering wheel operated by a driver. As steer-by-wire technology has advanced, the technology related to rear wheel steering (RWS) apparatus has also advanced. The rear wheel steering apparatus is included in an all-wheel steering (AWS) apparatus, which is capable of enhancing vehicle responsiveness and driving safety, and reducing a turning radius.

In general, a vehicle's rear wheel steering apparatus has a structure in which a steering shaft is coupled to a screw nut. A male screw pattern is formed on the steering shaft, and a female screw pattern that engages with the male screw pattern of the steering shaft is formed on the screw nut. When the screw nut is rotated by a driving unit, the steering shaft moves axially, and the rear wheels of the vehicle steer according to the operation of the steering shaft.

Unlike the front wheels, the rear wheels are not mechanically connected to the handle operated by a user. Therefore, the steering angle of the rear wheels may change not only by the user's operation but also by external forces. A rear wheel steering apparatus is required to prevent such issues.

The related art of the present disclosure is disclosed in Korean Patent Application Publication No. 10-2018-0120447 (published on November 6, 2018 and entitled "REAR WHEEL STEERING APPARATUS").

### SUMMARY

Exemplary embodiments of the present disclosure are directed to providing a reverse input prevention apparatus that prevents a steering angle of a rear wheel from changing due to an external force, and a rear wheel steering apparatus including the same.

In a general aspect, a reverse input prevention apparatus includes: a clutch housing; an input shaft disposed inside the clutch housing and configured to rotate about a rotation axis; an output shaft disposed inside the clutch housing and configured to rotate about the rotation axis; and a clutch device disposed inside the clutch housing and configured to contact the input shaft and the output shaft, transmit power from the input shaft to the output shaft, and frictionally contact the clutch housing to block power transmitted from the output shaft to the input shaft, wherein the clutch device includes a first clutch and a second clutch, the first clutch and the second clutch being rotated by rotation of the input shaft and moved outward from the rotation axis by rotation of the output shaft, and wherein the input shaft includes a limiting protrusion that contacts the first clutch and the second clutch and limits outward movement of the first clutch and the second clutch from the rotation axis.

The limiting protrusion may be disposed on an upper side and a lower side of the input shaft.

The output shaft may include an output transmission protrusion inserted into a clutch output groove recessed in the first clutch or the second clutch.

The output shaft may include an output shaft body, wherein the output transmission protrusion is disposed to protrude from the output shaft body.

The input shaft may include an input transmission protrusion inserted into a clutch input groove recessed in the first clutch or the second clutch.

The first clutch or the second clutch may include a clutch input protrusion that contacts the input transmission protrusion.

The input shaft may include an input shaft body, and an input fixing protrusion protruding from the input shaft body.

The input fixing protrusion may be disposed between the clutch input protrusion of the first clutch and the clutch input protrusion of the second clutch.

The input shaft may include an input shaft body, and an input shaft coupler protruding from the input shaft body.

In another general aspect, a rear wheel steering apparatus includes: a housing; a driver disposed inside the housing and including a driving force generation portion that generates driving force, and a worm shaft that rotates by the driving force; a reverse input prevention apparatus disposed inside the housing and configured to connect the driving force generation portion and the worm shaft; and a steering device disposed in the housing and including a steering rack bar that moves along an axial direction in conjunction with rotation of the worm shaft, wherein the reverse input prevention apparatus comprises a clutch housing, an input shaft disposed inside the clutch housing and configured to rotate about a rotation axis, an output shaft disposed inside the clutch housing and configured to rotate about the rotation axis, and a clutch device disposed inside the clutch housing and configured to contact the input shaft and the output shaft, transmit power from the input shaft to the output shaft, and frictionally contact the clutch housing to block power transmitted from the output shaft to the input shaft, wherein the clutch device includes a first clutch and a second clutch, the first clutch and the second clutch being rotated by rotation of the input shaft and moved outward from the rotation axis by rotation of the output shaft, and wherein the input shaft includes a limiting protrusion that contacts the first clutch and the second clutch and limits outward movement of the first clutch and the second clutch from the rotation axis.

The reverse input prevention apparatus and the rear wheel steering apparatus including the same according to the present disclosure may prevent the steering angle of the rear wheel from changing.

### BRIEF DESCRIPTION OF THE DRAWINGS

FIG. 1 is a perspective view of a rear wheel steering apparatus according to an embodiment of the present disclosure.
FIG. 2 is a perspective view of a portion of a rear wheel steering apparatus according to an embodiment of the present disclosure.
FIG. 3 is an exploded perspective view of a reverse input prevention apparatus according to a first embodiment of the present disclosure.
FIG. 4 is a perspective view of the reverse input prevention apparatus according to the first embodiment of the present disclosure as viewed from a first viewpoint.
FIG. 5 is a perspective view of the reverse input prevention apparatus according to the first embodiment of the present disclosure as viewed from a second viewpoint.
FIG. 6 is a plan view of the reverse input prevention apparatus according to the first embodiment of the present disclosure.
FIG. 7 is an exploded perspective view of a reverse input prevention apparatus according to a second embodiment of the present disclosure.
FIG. 8 is a perspective view of the reverse input prevention apparatus according to the second embodiment of the present disclosure as viewed from a first viewpoint.
FIG. 9 is a perspective view of the reverse input prevention apparatus according to the second embodiment of the present disclosure as viewed from a second viewpoint.
FIG. 10 is a front view of the reverse input prevention apparatus according to the second embodiment of the present disclosure.
FIG. 11 is a rear view of the reverse input prevention apparatus according to the second embodiment of the present disclosure.

### DETAILED DESCRIPTION

Embodiments of a rear wheel steering apparatus according to the present disclosure will be described hereinafter with reference to the accompanying drawings. In this process, the thickness of lines and the size of elements illustrated in the drawing may be exaggerated for clarity and convenience of description. In addition, the terms used below are defined in consideration of the functions thereof in the present disclosure and may vary depending on the intention of a user or an operator or common practice. Therefore, the definitions of such terms should be made based on the content set forth throughout the present specification.

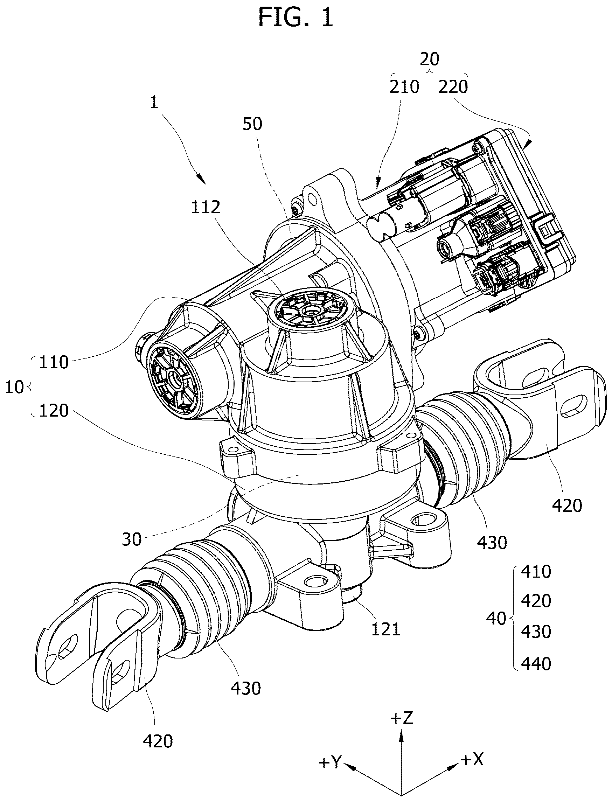

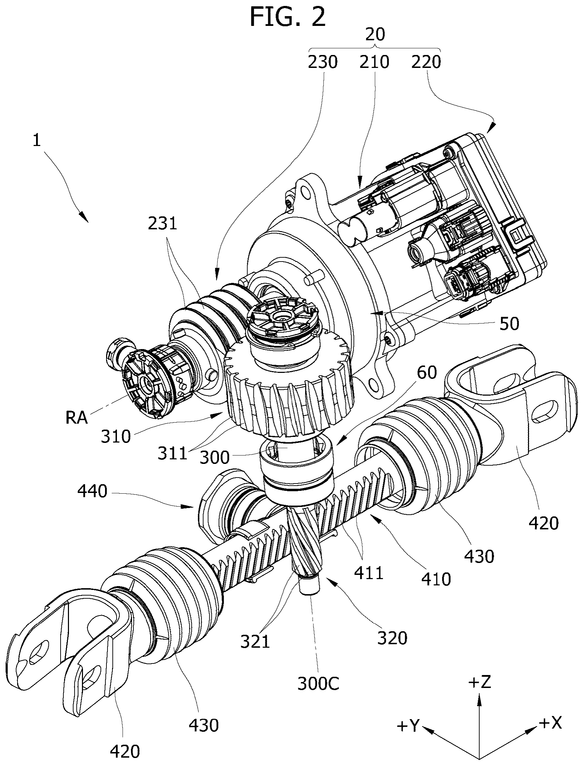

FIG. 1 is a perspective view of a rear wheel steering apparatus according to an embodiment of the present disclosure. FIG. 2 is a perspective view of a portion of a rear wheel steering apparatus according to an embodiment of the present disclosure.

A rear wheel steering apparatus 1 will be briefly described with reference to FIGS. 1 and 2.

The rear wheel steering apparatus 1 may include a housing 10, a driving unit 20, a driving force transmission unit 30, a steering unit 40, a reverse input prevention apparatus 50, and a steering angle sensor unit 60.

The driving force transmission unit 30 and the steering angle sensor unit 60 may be disposed in the housing 10. According to an embodiment, the driving force transmission unit 30 and the steering angle sensor unit 60 may be disposed inside the housing 10. The driving unit 20 (e.g., driver) and the steering unit 40 (e.g., steering device) may be disposed in the housing 10. According to an embodiment, the driving unit 20 and the steering unit 40 may be disposed inside the housing 10.

The driving unit 20 may be disposed and fixed in the housing 10 and configured to generate driving force. The driving force generated by the driving unit 20 may be transmitted to the reverse input prevention apparatus 50 connected to the driving unit 20 and the driving force transmission unit 30, and the driving force transmission unit 30 may be driven by the driving force. According to an embodiment, the driving force transmission unit 30 may rotate. The driving force may be transmitted from the driving force transmission unit 30 to the steering unit 40. The steering unit 40 may move by the driving force. According to an embodiment, the steering unit 40 may perform translational motion by the driving force. The steering unit 40 may move in conjunction with the driving of the driving unit 20.

As the steering unit 40 moves, a steering angle of a rear wheel (not illustrated) of a vehicle connected to the steering unit 40 may be adjusted.

Detailed configuration of the rear wheel steering apparatus 1 will be described below.

The housing 10 may include a first housing 110 and a second housing 120.

The first housing 110 and the second housing 120 may be coupled to each other, and a portion of the driving unit 20, the driving force transmission unit 30, a portion of the steering unit 40, and the reverse input prevention apparatus 50 may be disposed inside the first housing 110 and the second housing 120.

The driving unit 20 may be disposed in the first housing 110. More specifically, the driving unit 20 may be inserted into the first housing 110 and connected to the driving force transmission unit 30.

The driving force transmission unit 30 may be disposed in the first housing 110 and the second housing 120. More specifically, a portion of the driving force transmission unit 30 may be disposed inside the first housing 110, and another portion may be disposed inside the second housing 120.

The steering unit 40 may be disposed in the second housing 120. More specifically, the steering unit 40 may be inserted into the second housing 120 and connected to the driving force transmission unit 30. Accordingly, as the driving unit 20, the driving force transmission unit 30, and the steering unit 40 are connected, the driving force transmission unit 30 and the steering unit 40 may be driven in conjunction with the driving of the driving unit 20.

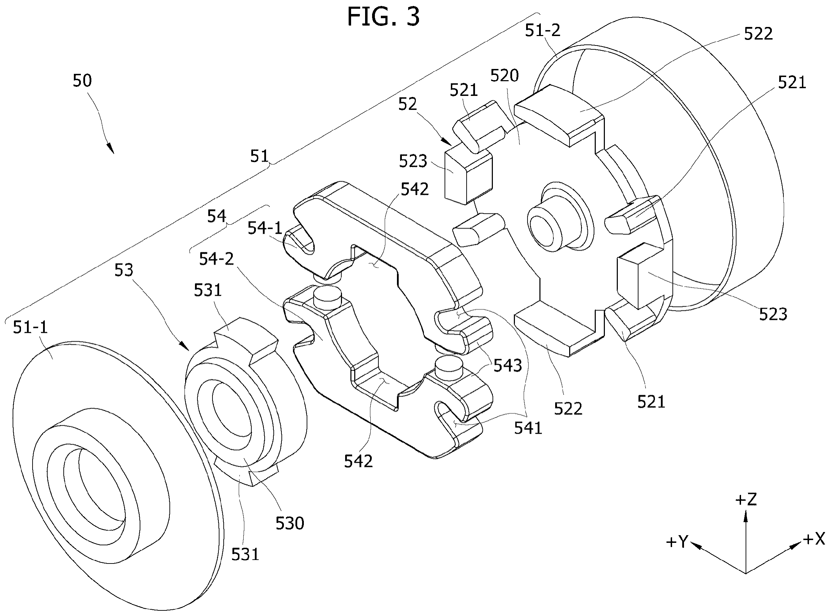

The reverse input prevention apparatus 50 may be disposed between a driving force generation portion 210 and a worm shaft 230. The description of the reverse input prevention apparatus 50 will be provided below in association with the description of FIGS. 3 to 11.

The first housing 110 may include a drive shaft support portion 111 and a first driving force transmission shaft support portion 112.

The drive shaft support portion 111 may be connected to the driving unit 20 and support the driving unit 20. As the driving unit 20 is supported by the drive shaft support portion 111, the driving unit 20 and the driving force transmission unit 30 may be securely connected. Accordingly, loss of driving force transmitted from the driving unit 20 to the driving force transmission unit 30 may be reduced.

The first driving force transmission shaft support portion 112 may be connected to the driving force transmission unit 30 and support the driving force transmission unit 30. According to an embodiment, the first driving force transmission shaft support portion 112 may be connected to an upper portion of the driving force transmission unit 30 (e.g., in the +Z-axis direction) and support the driving force transmission unit 30. As the driving force transmission unit 30 is supported by the first driving force transmission shaft support portion 112, the driving unit 20 and the driving force transmission unit 30 may be securely connected. Accordingly, loss of driving force transmitted from the driving unit 20 to the driving force transmission unit 30 may be reduced.

The second housing 120 may include a second driving force transmission shaft support portion 121.

The second driving force transmission shaft support portion 121 may be connected to the driving force transmission unit 30 and support the driving force transmission unit 30. According to an embodiment, the second driving force transmission shaft support portion 121 may be connected to a lower portion of the driving force transmission unit 30 (e.g., in the -Z-axis direction) and support the driving force transmission unit 30. As the driving force transmission unit 30 is supported by the second driving force transmission shaft support portion 121, the driving force transmission unit 30 and the steering unit 40 may be securely connected. Accordingly, loss of driving force transmitted from the driving force transmission unit 30 to the steering unit 40 may be reduced.

The driving unit 20 may be disposed in the housing 10. According to an embodiment, the driving unit 20 may be disposed to be inserted into the first housing 110. The driving unit 20 may include the driving force generation portion 210, a driving force control portion 220, and the worm shaft 230.

The driving force generation portion 210 may generate driving force to drive the rear wheel steering apparatus 1. According to an embodiment, the driving force generation portion 210 may be provided as a motor and rotate the worm shaft 230 connected to the driving force generation portion 210.

The driving force control portion 220 may control the rotation direction, rotation speed, and the like of the driving force generation portion 210 in response to a received signal. Accordingly, the rotation direction and rotation speed of the worm shaft 230 may change, and the movement direction or movement speed of the steering unit 40 may change.

The reverse input prevention apparatus 50 may be disposed between the driving force generation portion 210 and the worm shaft 230. The reverse input prevention apparatus 50 may transmit power generated by the driving force generation portion 210 to the worm shaft 230 and block power transmitted from the worm shaft 230 to the driving force generation portion 210.

The worm shaft 230 may be connected to the driving force generation portion 210 to be driven. According to an embodiment, the worm shaft 230 may rotate by the driving force of the driving force generation portion 210. The worm shaft 230 may be disposed parallel to a direction (e.g., an X-axis direction). The worm shaft 230 may rotate about a rotation axis RA.

Worm shaft teeth 231 may be disposed on the worm shaft 230. According to an embodiment, the worm shaft teeth 231 may be disposed on the outer surface of the worm shaft 230 and connected to the driving force transmission unit 30. More specifically, the worm shaft teeth 231 may be engaged with worm wheel teeth 311 of a worm wheel 310 in the driving force transmission unit 30.

Accordingly, as the worm shaft 230 rotates and the worm shaft teeth 231 are engaged with the worm wheel teeth 311, the worm wheel 310 may rotate.

The driving force transmission unit 30 may include a driving force transmission shaft 300, the worm wheel 310, and a pinion 320.

The central axis of the driving force transmission shaft 300 may be defined as a driving force transmission central axis 300C. The driving force transmission central axis 300C may be disposed substantially parallel to a Z-axis.

The worm wheel 310 and the pinion 320 may be disposed at both end portions of the driving force transmission shaft 300 (e.g., in the Z-axis direction). According to an embodiment, the worm wheel 310 may be disposed on an upper portion of the driving force transmission shaft 300 (e.g., in the +Z-axis direction), and the pinion 320 may be disposed on a lower portion of the driving force transmission shaft 300 (e.g., in the -Z-axis direction).

The worm wheel 310 may be connected to the driving force transmission shaft 300 and rotate about the driving force transmission central axis 300C. The worm wheel teeth 311 may be disposed on the worm wheel 310. According to an embodiment, the worm wheel teeth 311 may be disposed on the outer surface of the worm wheel 310. The worm wheel teeth 311 may be engaged with the worm shaft teeth 231.

As the worm shaft teeth 231 are engaged with the worm wheel teeth 311 and the worm shaft 230 rotates, the worm wheel 310 may rotate. As the worm wheel 310 rotates, the driving force transmission shaft 300 may rotate.

As driving force transmission shaft 300 rotates, the pinion 320 disposed on the driving force transmission shaft 300 may rotate.

The pinion 320 may be connected to the driving force transmission shaft 300 and rotate about the driving force transmission central axis 300C. Pinion teeth 321 may be disposed on the pinion 320. According to an embodiment, the pinion teeth 321 may be disposed on one side of the pinion 320 (e.g., in the -Y-axis direction) and be connected to the steering unit 40. More specifically, the pinion teeth 321 may be engaged with steering rack bar teeth 411 disposed on a steering rack bar 410 of the steering unit 40.

The steering unit 40 may include the steering rack bar 410, an end module 420, a foreign substance blocking portion 430, and a steering support portion 440.

The steering rack bar 410 may be disposed to be connected to the driving force transmission unit 30. According to an embodiment, the steering rack bar 410 may be connected to the pinion 320 of the driving force transmission unit 30. The steering rack bar teeth 411 may be disposed on the steering rack bar 410. The steering rack bar teeth 411 may be engaged with the pinion teeth 321. Accordingly, the steering rack bar 410 may move substantially parallel to a direction (e.g., in the X-axis direction) in response to rotation of the pinion 320. Accordingly, the steering rack bar 410 may perform translational motion.

The steering rack bar 410 may be disposed substantially parallel to the X-axis. The steering rack bar 410 may extend substantially parallel to the X-axis, and an axial direction of the steering rack bar 410 may be disposed substantially parallel to the X-axis.

Both end portions of the steering rack bar 410 (e.g., in the X-axis direction) may have end modules 420 disposed thereon. According to an embodiment, one end module 420 may be disposed on one side of the steering rack bar 410 (e.g., in the +X-axis direction), and the other end module 420 may be disposed on the other side of the steering rack bar 410 (e.g., in the -X-axis direction). Each end module 420 may be connected to a rear wheel of the vehicle. The end modules 420 may move in response to the movement of the steering rack bar 410, and as the end modules 420 move, the steering angles of the rear wheels of the vehicle connected to the respective end modules 420 may vary.

The foreign substance blocking portion 430 may be disposed between the second housing 120 and the end module 420. The foreign substance blocking portion 430 may prevent foreign substances from entering the rear wheel steering apparatus 1. The foreign substance blocking portion 430 may have a corrugated shape. According to an embodiment, the foreign substance blocking portion 430 may have a bellows configuration.

Accordingly, as the foreign substance blocking portion 430 has a corrugated shape, the length of the foreign substance blocking portion 430 may vary. As the steering unit 40 moves, the end module 420 may move away from the second housing 120, and the distance between the end module 420 and the second housing 120 may vary. As the foreign substance blocking portion 430, which has a variable length, is disposed between the end module 420 and the housing 10, the airtightness and/or waterproofness of the rear wheel steering apparatus 1 may be improved. Accordingly, the entry of foreign substances into the rear wheel steering apparatus 1 may be prevented.

The steering angle sensor unit 60 may detect rotation of the driving force transmission unit 30. According to an embodiment, the steering angle sensor unit 60 may detect a rotation angle (or steering angle) of the driving force transmission unit 30.

The steering angle sensor unit 60 may be disposed on the driving force transmission shaft 300 of the driving force transmission unit 30. According to an embodiment, the steering angle sensor unit 60 may be disposed between the worm wheel 310 and the pinion 320.

As the steering angle sensor unit 60 is provided as a sensor that detects rotation of the driving force transmission unit 30, common use with rotation detection sensors installed in vehicles is enabled. Accordingly, by providing the steering angle sensor unit 60 as a shared component, the cost of the rear wheel steering apparatus 1 may be reduced.

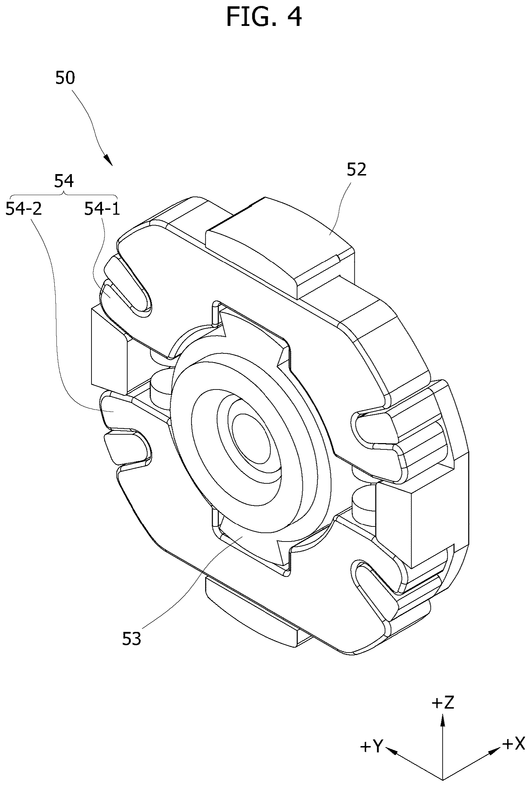

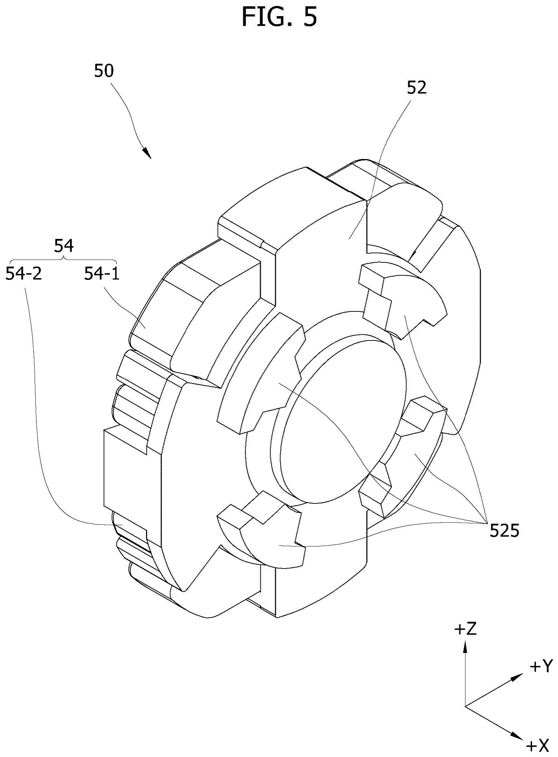

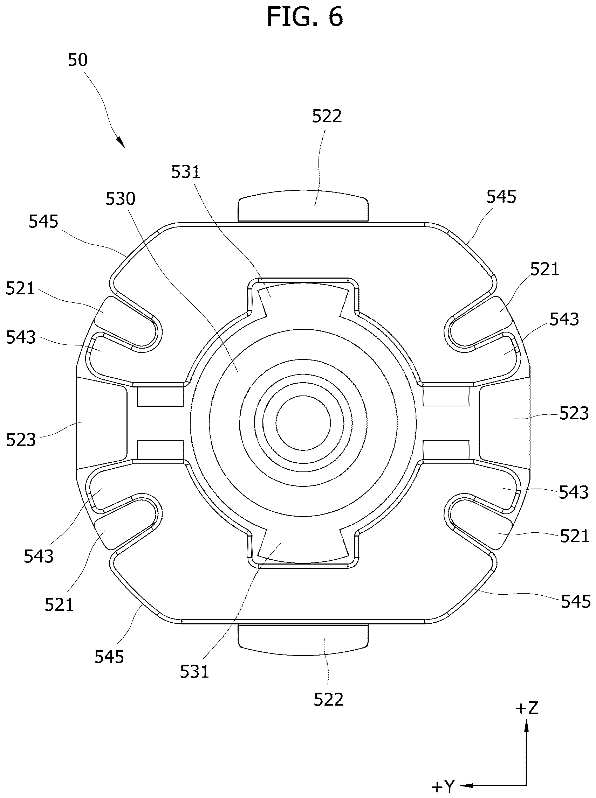

FIG. 3 is an exploded perspective view of a reverse input prevention apparatus according to a first embodiment of the present disclosure. FIG. 4 is a perspective view of the reverse input prevention apparatus according to the first embodiment of the present disclosure as viewed from a first viewpoint. FIG. 5 is a perspective view of the reverse input prevention apparatus according to the first embodiment of the present disclosure as viewed from a second viewpoint. FIG. 6 is a plan view of the reverse input prevention apparatus according to the first embodiment of the present disclosure.

Referring to FIGS. 3 to 6, a first embodiment of the reverse input prevention apparatus 50 will be described.

The reverse input prevention apparatus 50 may include a clutch housing 51, an input shaft 52, an output shaft 53, and a clutch unit 54 (e.g., a clutch device).

The clutch housing 51 may surround the input shaft 52, the output shaft 53, and the clutch unit 54. The clutch housing 51 may be configured as part of the first housing 110.

The clutch housing 51 may include a first clutch housing 51-1 and a second clutch housing 51-2. The first clutch housing 51-1 and the second clutch housing 51-2 may be coupled to each other, and the input shaft 52, the output shaft 53, and the clutch unit 54 may be disposed between the first clutch housing 51-1 and the second clutch housing 51-2.

The input shaft 52 may include an input shaft body 520, an input transmission protrusion 521, a limiting protrusion 522, an input fixing protrusion 523, and an input shaft coupler 525.

The input shaft body 520 may be substantially disk-shaped.

The input transmission protrusion 521 may protrude from the input shaft body 520 in a direction (e.g., in the -X-axis direction). The input transmission protrusion 521 may extend toward the rotation axis (e.g., the rotation axis RA in FIG. 1). The input transmission protrusion 521 extending toward the rotation axis RA may be inserted into the clutch unit 54. According to an embodiment, the input transmission protrusion 521 may be inserted into a first clutch 54-1 and/or a second clutch 54-2. A plurality of input transmission protrusions 521 may be provided. The input transmission protrusion 521 may be disposed symmetrically about the rotation axis RA.

As the input transmission protrusion 521 is inserted into clutch input grooves 541 formed in the first clutch 54-1 and/or the second clutch 54-2, the first clutch 54-1 and/or the second clutch 54-2 may contact the input transmission protrusion 521 and rotate in accordance with rotation of the input shaft body 520.

As the input shaft body 520 rotates, the input transmission protrusion 521 protruding from the input shaft body 520 may rotate the clutch unit 54, and the clutch unit 54 may contact the output shaft 53 and rotate the output shaft 53. The output shaft 53 may be connected to the worm shaft 230 and rotate the worm shaft 230.

The limiting protrusion 522 may protrude from the input shaft body 520 in a direction (e.g., in the -X-axis direction). The limiting protrusion 522 may be disposed on the upper side (e.g., in the +Z-axis direction) and the lower side (e.g., in the -Z-axis direction) of the input shaft body 520.

The limiting protrusion 522 may contact the first clutch 54-1 and/or the second clutch 54-2. The limiting protrusion 522 may limit upward movement of the first clutch 54-1 (e.g., in the +Z axis direction) and limit downward movement of the second clutch 54-2 (e.g., in the -Z axis direction).

The input fixing protrusion 523 may protrude from the input shaft body 520 in a direction (e.g., in the -X-axis direction). The input fixing protrusion 523 may be disposed on a side of the input shaft body 520 (e.g., in the Y-axis direction). The input fixing protrusion 523 may be disposed between adjacent input transmission protrusions 521.

The input fixing protrusion 523 may be disposed between the first clutch 54-1 and the second clutch 54-2. The input fixing protrusion 523 may prevent the first clutch 54-1 and the second clutch 54-2 from coming closer than a predetermined distance.

The input shaft coupler 525 may protrude from the input shaft body 520 in the opposite direction (e.g., in the +X-axis direction). The input shaft coupler 525 may be disposed on the rear surface of the input shaft body 520 (e.g., in the +X-axis direction) and be connected to the driving force generation portion 210. The driving force generation portion 210 and the input shaft 52 are connected by the input shaft coupler 525, so that the input shaft 52 may rotate.

The output shaft 53 may include an output shaft body 530 and an output transmission protrusion 531.

The output shaft body 530 may be substantially disk-shaped.

The output transmission protrusion 531 may protrude from the output shaft body 530. According to an embodiment, the output transmission protrusion 531 may be disposed parallel to a direction of the output shaft body 530 (e.g., in the Z-axis direction). The output transmission protrusion 531 may be inserted into clutch output grooves 542 recessed in the first clutch 54-1 and the second clutch 54-2. Accordingly, as the first clutch 54-1 and the second clutch 54-2 rotate, the output transmission protrusion 531 and the clutch output groove 542 may engage to allow the output shaft 53 to rotate.

The first clutch 54-1 may include a clutch input protrusion 543 that contacts an input transmission protrusion 521.

The second clutch 54-2 may include a clutch input protrusion 543 that contacts an input transmission protrusion 521.

Referring to FIG. 6, the reverse input prevention apparatus 50 in an assembled state is illustrated.

The clutch housing 51 of the reverse input prevention apparatus 50 is omitted, and the clutch housing 51 may be realized as the first housing 110.

The clutch unit 54 may be disposed on the input shaft 52. According to an embodiment, the first clutch 54-1 and the second clutch 54-2 may be disposed on the input shaft body 520. The rotation axis RA, the rotation center of the input shaft 52, may be disposed between the first clutch 54-1 and the second clutch 54-2. The first clutch 54-1 and the second clutch 54-2 may be disposed on the input shaft body 520 and move vertically (e.g., in the Z-axis direction of FIG. 6). The first clutch 54-1 and the second clutch 54-2 may move vertically, so that the distance between the first clutch 54-1 and the second clutch 54-2 may vary.

Hereinafter, power transmission in the order of the input shaft 52, the clutch unit 54, and the output shaft 53 is defined as "forward input." In addition, power transmission in the order of the output shaft 53 and the clutch unit 54 is defined as "reverse input."

In the forward input condition, the input shaft body 520 may rotate via the input shaft coupler 525 connected to the driving force generation portion 210. As the input shaft body 520 rotates, the input transmission protrusion 521 and the limiting protrusion 522 may contact the first clutch 54-1 and the second clutch 54-2, so that the clutch unit 54 may rotate.

More specifically, the input transmission protrusion 521 may be inserted into the clutch input groove 541 recessed in the first clutch 54-1 and the second clutch 54-2, so that the first clutch 54-1 and the second clutch 54-2 may rotate about the rotation axis RA.

In addition, the limiting protrusion 522 may contact the first clutch 54-1 and the second clutch 54-2, so that the first clutch 54-1 and the second clutch 54-2 may rotate about the rotation axis RA.

Furthermore, the input fixing protrusion 523, disposed between the first clutch 54-1 and the second clutch 54-2, may contact the first clutch 54-1 and the second clutch 54-2, so that the first clutch 54-1 and the second clutch 54-2 may rotate about the rotation axis RA.

The input fixing protrusion 523 may be disposed between the input transmission protrusion 543 of the first clutch 54-1 and the input transmission protrusion 543 of the second clutch 54-2

The output transmission protrusion 531 of the output shaft body 530 may be disposed in the clutch output grooves 542 formed as recessed grooves in the first clutch 54-1 and the second clutch 54-2. As the first clutch 54-1 and the second clutch 54-2 rotate, the clutch output groove 542 may contact the output transmission protrusion 531. Accordingly, the clutch output groove 542 may contact the output transmission protrusion 531, so that the output shaft body 530 may rotate.

In the reverse input condition, the output shaft 53 connected to the worm shaft 230 may rotate. By the rotation of the output shaft 53, the output shaft body 530 may rotate, and the output transmission protrusion 531 protruding from the output shaft body 530 may contact the first clutch 54-1 and the second clutch 54-2. The output transmission protrusion 531, disposed in the clutch output groove 542, may contact the first clutch 54-1 and the second clutch 54-2, which causes the first clutch 54-1 to move upward (e.g., in the +Z-axis direction of FIG. 6) and the second clutch 54-2 to move downward (e.g., in the -Z-axis direction of FIG. 6). As the first clutch 54-1 moves upward and the second clutch 54-2 moves downward, the distance between the first clutch 54-1 and the second clutch 54-2 may increase. The moving clutch unit 54 may contact the clutch housing 51. The clutch housing 51 may be realized as the first housing 110.

The first clutch 54-1 moving upward and the second clutch 54-2 moving downward may contact the clutch housing 51.

The clutch unit 54 may include clutch friction portions 545 disposed on the first clutch 54-1 and the second clutch 54-2. The clutch friction portion 545 may be disposed on the first clutch 54-1 and the second clutch 54-2 and contact the clutch housing 51 to generate friction. As the first clutch 54-1 moves upward, the frictional force generated between the first clutch 54-1 and the clutch housing 51 may increase, and as the second clutch 54-2 moves downward, the frictional force generated between the second clutch 54-2 and the clutch housing 51 may increase.

Accordingly, as the clutch unit 54 moves due to the rotation of the output shaft 53 and the frictional force between the clutch unit 54 and the clutch housing 51 increases, the clutch unit 54 may stop without rotating due to the frictional force. Accordingly, reverse input transmitted from a tire (not illustrated), the steering unit 40, and the driving force transmission unit 30 may not be transmitted to the driving force generation portion 210. Furthermore, as the clutch unit 54 stops, the tire, the steering unit 40, and the driving force transmission unit 30 may also stop, such that steering due to an external force may not occur.

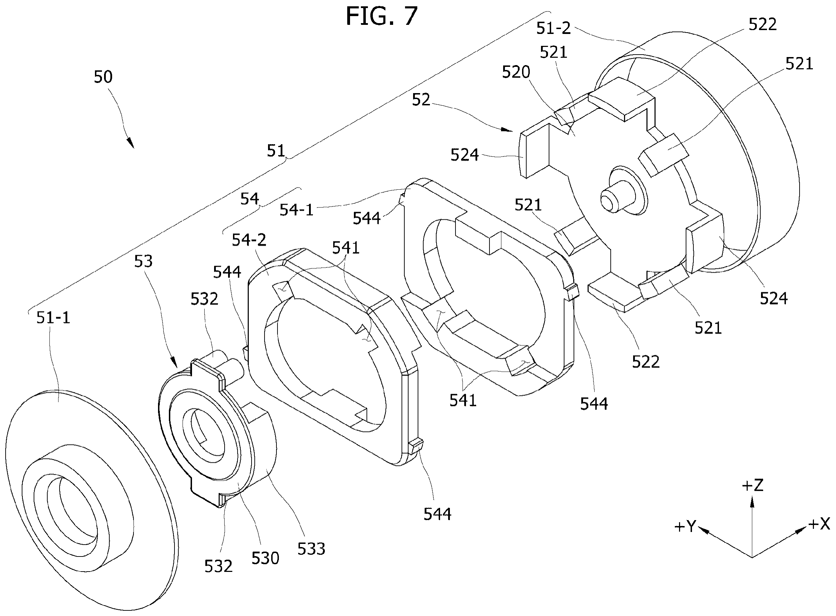

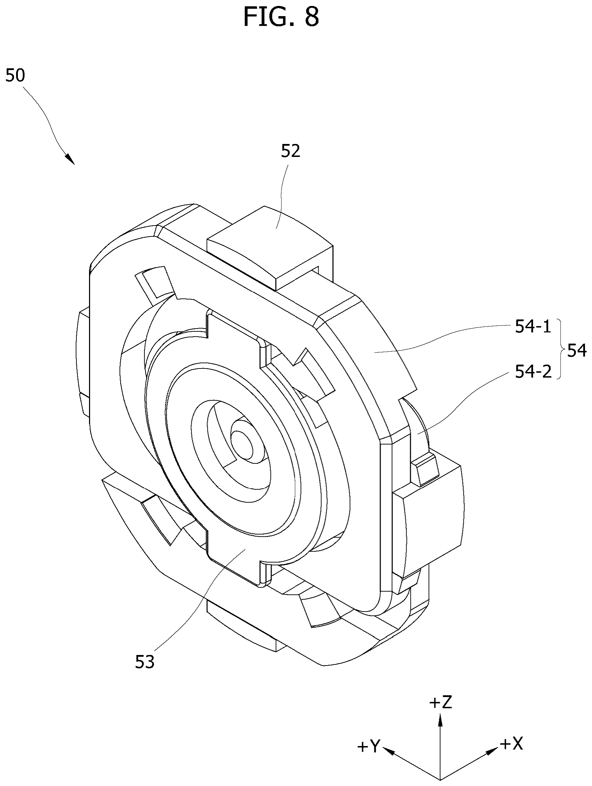

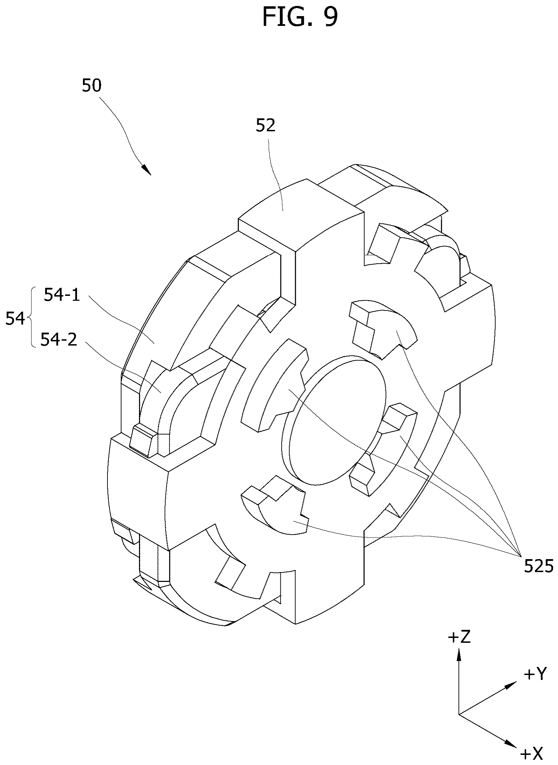

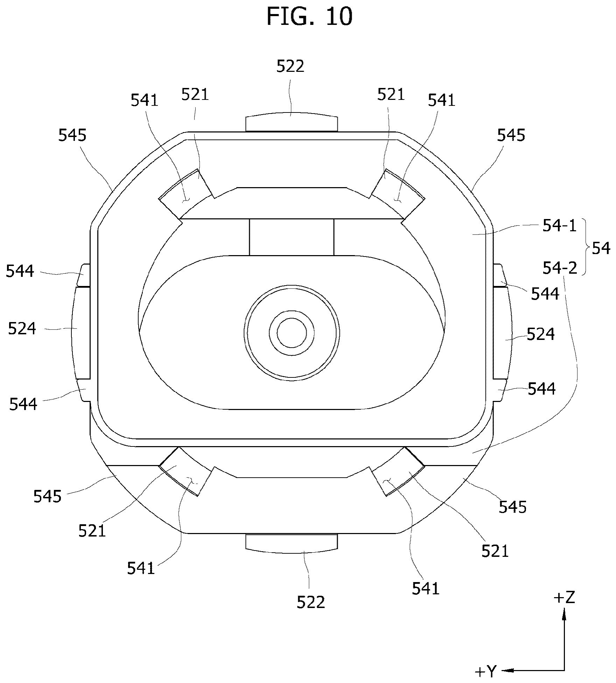

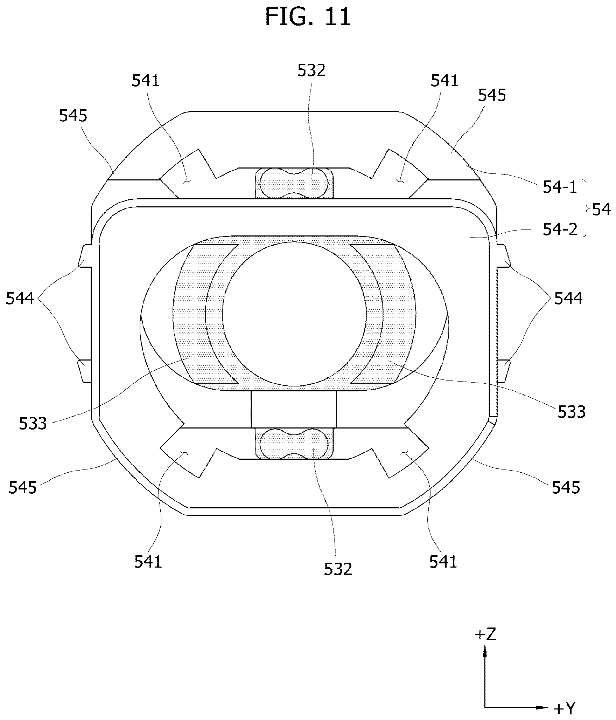

FIG. 7 is an exploded perspective view of a reverse input prevention apparatus according to a second embodiment of the present disclosure. FIG. 8 is a perspective view of the reverse input prevention apparatus according to the second embodiment of the present disclosure as viewed from a first viewpoint. FIG. 9 is a perspective view of the reverse input prevention apparatus according to the second embodiment of the present disclosure as viewed from a second viewpoint. FIG. 10 is a front view of the reverse input prevention apparatus according to the second embodiment of the present disclosure. FIG. 11 is a rear view of the reverse input prevention apparatus according to the second embodiment of the present disclosure.

Referring to FIGS. 7 to 11, a second embodiment of the reverse input prevention apparatus 50 will be described.

The reverse input prevention apparatus 50 may include a clutch housing 51, an input shaft 52, an output shaft 53, and a clutch unit 54.

The clutch housing 51 may surround the input shaft 52, the output shaft 53, and the clutch unit 54. The clutch housing 51 may be configured as part of a first housing 110.

The clutch housing 51 may include a first clutch housing 51-1 and a second clutch housing 51-2. The first clutch housing 51-1 and the second clutch housing 51-2 may be coupled to each other, and the input shaft 52, the output shaft 53, and the clutch unit 54 may be disposed between the first clutch housing 51-1 and the second clutch housing 51-2.

The input shaft 52 may include an input shaft body 520, an input transmission protrusion 521, a limiting protrusion 522, a guide protrusion 524, and an input shaft coupler 525.

The input shaft body 520 may be substantially disk-shaped.

The input transmission protrusion 521 may protrude from the input shaft body 520 in a direction (e.g., in the -X-axis direction). The input transmission protrusion 521 may extend toward the rotation axis (e.g., the rotation axis RA in FIG. 1). The input transmission protrusion 521 extending toward the rotation axis RA may be inserted into the clutch unit 54. According to an embodiment, the input transmission protrusion 521 may be inserted into a first clutch 54-1 and/or a second clutch 54-2. A plurality of input transmission protrusions 521 may be provided. The input transmission protrusion 521 may be disposed symmetrically about the rotation axis RA.

As the input transmission protrusion 521 is inserted into clutch input grooves 541 formed in the first clutch 54-1 and/or the second clutch 54-2, the first clutch 54-1 and/or the second clutch 54-2 may contact the input transmission protrusion 521 and rotate in accordance with rotation of the input shaft body 520.

As the input shaft body 520 rotates, the input transmission protrusion 521 protruding from the input shaft body 520 may rotate the clutch unit 54, and the clutch unit 54 may contact the output shaft 53 and rotate the output shaft 53. The output shaft 53 may be connected to the worm shaft 230 and rotate the worm shaft 230.

The limiting protrusion 522 may protrude from the input shaft body 520 in a direction (e.g., in the -X-axis direction). The limiting protrusion 522 may be disposed on the upper side (e.g., in the +Z-axis direction) and the lower side (e.g., in the -Z-axis direction) of the input shaft body 520.

The limiting protrusion 522 may contact the first clutch 54-1 and/or the second clutch 54-2. The limiting protrusion 522 may limit downward movement of the first clutch 54-1 (e.g., in the -Z-axis direction) and limit upward movement of the second clutch 54-2 (e.g., in the +Z-axis direction).

The guide protrusion 524 may protrude from the input shaft body 520 in a direction (e.g., in the -X-axis direction). The guide protrusion 524 may be disposed on a side (e.g., in the Y-axis direction) of the input shaft body 520. The guide protrusion 524 may be disposed between clutch side protrusions 544 disposed on the first clutch 54-1 and clutch side protrusions 544 disposed on the second clutch 54-2. The guide protrusion 524 may guide the first clutch 54-1 and the second clutch 54-2 to move vertically (e.g., in the Z-axis direction of FIG. 7). The clutch side protrusions 544 may be disposed on both sides of the guide protrusion 524 (e.g., in the Z-axis direction).

The input shaft coupler 525 may protrude from the input shaft body 520 in the opposite direction (e.g., the +X-axis direction). The input shaft coupler 525 may be disposed on the rear surface of the input shaft body 520 (e.g., in the +X-axis direction) and be connected to the driving force generation portion 210. The driving force generation portion 210 and the input shaft 52 are connected by the input shaft coupler 525, so that the input shaft 52 may rotate.

The output shaft 53 may include an output shaft body 530, an output transmission projection portion 532, and an output transmission inner protrusion 533.

The output shaft body 530 may be substantially disk-shaped.

The output transmission projection portion 532 may protrude from the output shaft body 530. According to an embodiment, the output transmission projection portion 532 may be disposed parallel to a direction of the output shaft body 530 (e.g., in the X-axis direction). The output transmission projection portion 532 may be disposed between the first clutch 54-1 and the second clutch 54-2. Accordingly, as the first clutch 54-1 and the second clutch 54-2 rotate, the output transmission projection portion 532 may be engaged between the first clutch 54-1 and the second clutch 54-2, so that the output shaft 53 may rotate.

The output transmission inner protrusion 533 may be disposed between the first clutch 54-1 and the second clutch 54-2. The output transmission inner protrusion 533 may be disposed between the first clutch 54-1 and the second clutch 54-2 to limit upward movement of the first clutch 54-1 (e.g., in the +Z-axis direction of FIG. 11) to a predetermined distance and to limit downward movement of the second clutch 54-2 (e.g., in the -Z-axis direction of FIG. 11) to a predetermined distance.

Referring to FIGS. 10 and 11, the reverse input prevention apparatus 50 in an assembled state is illustrated.

The clutch housing 51 of the reverse input prevention apparatus 50 is omitted, and the clutch housing 51 may be realized as the first housing 110.

The clutch unit 54 may be disposed on the input shaft 52. According to an embodiment, the first clutch 54-1 and the second clutch 54-2 may be disposed on the input shaft body 520. The rotation axis RA, which is the rotation center of the input shaft 52, may be disposed between the first clutch 54-1 and the second clutch 54-2. The first clutch 54-1 and the second clutch 54-2 may be disposed on the input shaft body 520 and move vertically (e.g., in the Z-axis direction of FIG. 7). The first clutch 54-1 and the second clutch 54-2 may move vertically, so that the distance between the first clutch 54-1 and the second clutch 54-2 may vary.

A portion of the first clutch 54-1 and a portion of the second clutch 54-2 may be disposed to overlap each other. According to an embodiment, a portion of the first clutch 54-1 and a portion of the second clutch 54-2 may be disposed to overlap in the X-axis direction.

Hereinafter, power transmission in the order of the input shaft 52, the clutch unit 54, and the output shaft 53 is defined as "forward input." In addition, power transmission in the order of the output shaft 53 and the clutch unit 54 is defined as "reverse input."

In the forward input condition, the input shaft body 520 may rotate via the input shaft coupler 525 connected to the driving force generation portion 210. As the input shaft body 520 rotates, the input transmission protrusion 521, the limiting protrusion 522, and the guide protrusion 524 may contact the first clutch 54-1 and the second clutch 54-2, so that the clutch unit 54 may rotate.

More specifically, the input transmission protrusion 521 may be inserted into the clutch input groove 541 recessed in the first clutch 54-1 and the second clutch 54-2, so that the first clutch 54-1 and the second clutch 54-2 may rotate about the rotation axis RA.

In addition, the limiting protrusion 522 may contact the first clutch 54-1 and the second clutch 54-2, so that the first clutch 54-1 and the second clutch 54-2 may rotate about the rotation axis RA.

Furthermore, the guide protrusion 524, disposed between a clutch side protrusion 544 of the first clutch 54-1 and a clutch side protrusion 544 of the second clutch 54-2, may contact the first clutch 54-1, the second clutch 54-2, and the clutch side protrusions 544, so that the first clutch 54-1 and the second clutch 54-2 may rotate about the rotation axis RA.

Furthermore, the output transmission projection portion 532 of the output shaft 53, disposed between the first clutch 54-1 and the second clutch 54-2, may rotate in contact with the first clutch 54-1 and the second clutch 54-2 as the first clutch 54-1 and the second clutch 54-2 rotate. Accordingly, as the output transmission projection portion 532 contacts the first clutch 54-1 and the second clutch 54-2, the output shaft body 530 may rotate.

In the reverse input condition, the output shaft 53 connected to the worm shaft 230 may rotate. By the rotation of the output shaft 53, the output shaft body 530 may rotate, and the output transmission projection portion 532 protruding from the output shaft body 530 may contact the first clutch 54-1 and the second clutch 54-2. The output transmission projection portion 532, disposed between the first clutch 54-1 and the second clutch 54-2, may contact the first clutch 54-1 and the second clutch 54-2, which causes the first clutch 54-1 to move upward (e.g., in the +Z-axis direction of FIG. 11) and the second clutch 54-2 to move downward (e.g., in the -Z-axis direction of FIG. 6). As the first clutch 54-1 moves upward and the second clutch 54-2 moves downward, the distance between the first clutch 54-1 and the second clutch 54-2 may increase. The moving clutch unit 54 may contact the clutch housing 51. The clutch housing 51 may be realized as the first housing 110.

The first clutch 54-1 moving upward and the second clutch 54-2 moving downward may contact the clutch housing 51.

The clutch unit 54 may include clutch friction portions 545 disposed on the first clutch 54-1 and the second clutch 54-2. The clutch friction portion 545 may be disposed on the first clutch 54-1 and the second clutch 54-2 and contact the clutch housing 51 to generate friction. As the first clutch 54-1 moves upward, the frictional force generated between the first clutch 54-1 and the clutch housing 51 may increase, and as the second clutch 54-2 moves downward, the frictional force generated between the second clutch 54-2 and the clutch housing 51 may increase.

Accordingly, as the clutch unit 54 moves due to the rotation of the output shaft 53 and the frictional force between the clutch unit 54 and the clutch housing 51 increases, the clutch unit 54 may stop without rotating due to the frictional force. Accordingly, reverse input transmitted from a tire (not illustrated), the steering unit 40, and the driving force transmission unit 30 may not be transmitted to the driving force generation portion 210. Furthermore, as the clutch unit 54 stops, the tire, the steering unit 40, and the driving force transmission unit 30 may also stop, such that steering due to an external force may not occur.

Although the present disclosure has been described with reference to an embodiment illustrated in the drawings, but this is merely exemplary, and those skilled in the art will understand that various modifications and other equivalent embodiments can be made therefrom. Accordingly, the true scope of the present disclosure should be defined only by the appended claims.

## Claims

1. A reverse input prevention apparatus comprising:
a clutch housing;
an input shaft disposed inside the clutch housing and configured to rotate about a rotation axis;
an output shaft disposed inside the clutch housing and configured to rotate about the rotation axis; and
a clutch device disposed inside the clutch housing and configured to:
contact the input shaft and the output shaft;
transmit power from the input shaft to the output shaft; and
frictionally contact the clutch housing to block power transmitted from the output shaft to the input shaft,
wherein the clutch device comprises a first clutch and a second clutch, the first clutch and the second clutch being rotated by rotation of the input shaft and moved outward from the rotation axis by rotation of the output shaft, and
wherein the input shaft comprises a limiting protrusion that contacts the first clutch and the second clutch and limits outward movement of the first clutch and the second clutch from the rotation axis.

2. The reverse input prevention apparatus as claimed in claim 1, wherein the limiting protrusion is disposed on an upper side and a lower side of the input shaft.

3. The reverse input prevention apparatus as claimed in claim 1 or 2, wherein the output shaft comprises an output transmission protrusion inserted into a clutch output groove recessed in the first clutch or the second clutch.

4. The reverse input prevention apparatus as claimed in claim 3, wherein the output shaft comprises an output shaft body, and
wherein the output transmission protrusion is disposed to protrude from the output shaft body.

5. The reverse input prevention apparatus as claimed in any one of claims 2 to 4, wherein the input shaft comprises an input transmission protrusion inserted into a clutch input groove recessed in the first clutch or the second clutch.

6. The reverse input prevention apparatus as claimed in claim 5, wherein the first clutch or the second clutch comprises a clutch input protrusion that contacts the input transmission protrusion.

7. The reverse input prevention apparatus as claimed in claim 6, wherein the input shaft comprises:
an input shaft body; and
an input fixing protrusion protruding from the input shaft body.

8. The reverse input prevention apparatus as claimed in claim 7, wherein the input fixing protrusion is disposed between the clutch input protrusion of the first clutch and the clutch input protrusion of the second clutch.

9. The reverse input prevention apparatus as claimed in any one of claims 1 to 8, wherein the input shaft comprises:
an input shaft body; and
an input shaft coupler protruding from the input shaft body.

10. A rear wheel steering apparatus comprising:
a housing;
a driver disposed inside the housing and including:
a driving force generation portion that generates driving force; and
a worm shaft that rotates by the driving force;
a reverse input prevention apparatus disposed inside the housing and configured to connect the driving force generation portion and the worm shaft; and
a steering device disposed in the housing and including a steering rack bar that moves along an axial direction in conjunction with rotation of the worm shaft,
wherein the reverse input prevention apparatus comprises:
a clutch housing;
an input shaft disposed inside the clutch housing and configured to rotate about a rotation axis;
an output shaft disposed inside the clutch housing and configured to rotate about the rotation axis; and
a clutch device disposed inside the clutch housing and configured to:
contact the input shaft and the output shaft;
transmit power from the input shaft to the output shaft; and
frictionally contact the clutch housing to block power transmitted
from the output shaft to the input shaft,
wherein the clutch device comprises a first clutch and a second clutch, the first clutch and the second clutch being rotated by rotation of the input shaft and moved outward from the rotation axis by rotation of the output shaft, and
wherein the input shaft comprises a limiting protrusion that contacts the first clutch and the second clutch and limits outward movement of the first clutch and the second clutch from the rotation axis.
